# EUROPÄISCHE PATENTSCHRIFT

(11) **EP 2 763 561 B1**
(45) Veröffentlichungstag und Bekanntmachung des Hinweises auf die Patenterteilung: **15.07.2015**
(21) Anmeldenummer: 12768804.2
(22) Anmeldetag: 02.10.2012
(51) Int. Cl.: A43B 7/12, A43B 7/08, A43B 23/02, B60N 2/58

(54) **VERBUNDSTOFF MIT VERBESSERTER FEUCHTIGKEITSABLEITUNG**
COMPOSITE WITH IMPROVED MOISTURE DRAINAGE
MATÉRIAU COMPOSITE À TRANSFERT D'HUMIDITÉ AMÉLIORÉ

(30) Priorität: 05.10.2011 EP 11183965
(43) Veröffentlichungstag der Anmeldung: 13.08.2014
(73) Patentinhaber: Sympatex Technologies GmbH, 85774 Unterföhring (DE)
(72) Erfinder: MOUHASSIN, Mhamed, 80939 München (DE); PAVELESCU, Liviu-Mihai, 81925 München (DE)
(74) Vertreter: Oberlein, Gerriet H. R.
(86) Internationale Anmeldenummer: PCT/EP2012/069416
(87) Internationale Veröffentlichungsnummer: WO 2013/050349

(56) Entgegenhaltungen:
- WO-A1-97/23364
- WO-A2-98/51177

## Beschreibung

Die vorliegende Erfindung betrifft einen Verbundstoff mit verbesserter Feuchtigkeitsableitung, beispielsweise zur Anwendung als Sitzüberzug oder Sitzbezug Oder im Schuhschaft.

Verbundstoffe zur Anwendung in Schuhen, Sitzüberzügen oder in Kleidungsstücken sind bekannt. So beschreibt beispielsweise die EP 0 857 433 B1 einen Schuh mit einer Außenschicht und innerhalb dieser Außenschicht verlaufenden Ventilationsschicht, welche zumindest auf der dem Innenraum des Schuhs zugekehrten Seite ein textiles Flächengebilde aufweist, welches über Abstandshalter auf Abstand von der Außenschicht gehalten wird.

DE 44 19 801 A1 beschreibt ein Bekleidungsstück und ein Schuhwerk jeweils mit einer Außenschicht und mit einem Verbundstoff. Der Verbundstoff enthält eine wasserdichte, wasserdampfdurchlässige Funktionsschicht, wobei auf einer Seite der Funktionsschicht eine luftdurchlässige Wirkwarenschicht angeordnet ist. Die Außenschicht kann mindestens ein Vertreter der eine Lederschicht, Textilschicht, textilartige Schicht und Gewebe umfassenden Gruppe sein. Möglich sind für die Außenschicht als Obermaterial Segeltuchstoffe, Chintz, Everglaze, Frottierware, Samt, Manchester, Cord, Velveton, Norzon, Ledertuch, Ledersamt, Duventine, gestrickte oder gewirkte Gewebe, Satin, Fell, Fellimitation, Rau-, Glatt-, Lackleder oder geschliffenes, geprägtes, geschrumpftes oder gekrispeltes Leder. Die Außenschicht ist auf dem Verbundstoff lediglich angeordnet, wobei die Außenschicht auf der der Wirkwarenschicht gegenüberliegenden Seite der Funktionsschicht Oder auf der der Funktionsschicht gegenüberliegenden Seite der Wirkwarenschicht angeordnet sein kann.

Die WO2010/149680 offenbart einen Schuhoberstoff aus drei bis vier Schichten, nämlich in der Richtung von außen nach innen:
Eine als Außenschicht dienende Ventilationsschicht, darunter eine wasserdampfdurchlässige Membran, darunter eine Wirkware aus einem Multiflament- bzw. Monofilamentgarn und optional darunter einen Futterstoff, der aus einem hydrophilen oder hydrophoben Material bestehen kann, wobei sowohl die Ventilationsschicht als auch die die Wirkware jeweils mit der wasserdampfdurchlässigen Membran laminiert sind.

Eine solche Konstruktion bietet bereits eine sehr hohe Atmungsaktivität, lässt aber hinsichtlich des Feuchtigkeitstransportes nach außen noch Verbesserungsbedarf zu.

Die WO1998/051177 offenbart in Fig. 3bis einen Verbundstoff für einen Schuh, welcher eine wasserdampfdurchlässige Membran 215a umfasst, auf der sich eine Schicht 222c aus einem hydrophilen Material befindet. Oberhalb der hydrophilen Schicht 222c ist eine sogenannte "Füllschicht" 222a - beispielsweise aus Filz - angebracht, die entweder wasserdampfdurchlässig oder aber perforiert ist. Schließlich befindet sich auf der Füllschicht 222a der WO1998/051177 noch eine Schicht 222b aus einem hydrophoben Material.

Die hydrophobe Schicht 222b ist dazu gedacht, die Feuchtigkeit in Richtung der hydrophilen Schicht 222c und damit in Richtung der Membran 215a zu treiben.

Der in der WO1998/051177 vorgeschlagene Aufbau ergibt zwar eine wirksamere Feuchtigkeitsableitung, lässt aber bezüglich der Effizienz noch zu wünschen übrig.

Die vorliegende Erfindung schlägt daher einen verbesserten Verbundstoff zur Anwendung im Schuhschaft oder im Sitzüberzug vor.

Die Erfindung betrifft einen Verbundstoff, welcher eine wasserdichte, wasserdampfdurchlässige Funktionsschicht sowie einen luftdurchlässigen Zweischichtenverbund umfasst, welcher dadurch gekennzeichnet ist, dass der Zweischichtenverbund so aufgebaut ist, dass die der Funktionsschicht zugewandte Schicht des Zweischichtenverbundes eine größere Hydrophilie bzw. ein höheres Absorptionsvermögen aufweist als die der Funktionsschicht gegenüberliegende Schicht des Zweischichtenverbundes.

Der Kern der Erfindung besteht demnach in einem Hydrophilie- und Absorptionsgradienten, wobei die Hydrophilie bzw. das Absorptionsvermögen in Richtung der Membran sukzessive zunimmt. Es ist dabei durchaus unkritisch, wenn Materialien für die einzelnen Schichten eingesetzt werden, die man "landläufig" als eher hydrophob charakterisieren würde, solange die Hydrophobie von Schicht zu Schicht in Richtung Membran abnimmt und demzufolge die Hydrophilie in der gleichen Richtung zunimmt.

Es kommt durch den Verbundstoff gemäß vorliegender Erfindung zu einem gerichteten Feuchtetransport, der auch gegen die Schwerkraft (z.B. in bestimmten Bereichen des Schuhschaftes) funktioniert.

Im Gegensatz dazu schlägt die WO1998/051177 zwar eine obere hydrophobe Schicht 222b und eine an die Membran grenzende hydrophile Schicht 222c vor, jedoch befindet sich zwischen diesen Schichten eine Füllschicht 222a, die lediglich perforiert bzw. wasserdampfdurchlässig ausgeführt ist. Durch den in der WO1998/051177 vorgeschlagenen Aufbau der Schichten kommt es zu einem Transport von Feuchtigkeit in Form von Wasserdampf, nicht jedoch von Wasser, da die hydrophob ausgelegte Schicht 222b das Wasser abweist. Da sich diese hydrophobe Schicht oben befindet, ist sie also in Verbindung mit dem Fuß. An einer Stelle, an der sich die meiste Feuchtigkeit in Form von Wasser bilden kann, ist somit eine wasserabweisende Schicht angeordnet. Demzufolge kommt es an der Stelle im Schuh, an der das höchste Auftreten von Schweiß zu erwarten ist, zu einem sehr geringen Abtransport von Flüssigkeit. Die WO1998/051177 sieht daher Perforationen vor, um das Wasser vom Fuß weg durch die Schichten zu transportieren. Ein solcher - passiver Transport - kann jedoch im Wesentlichen nur in Richtung der Schwerkraft- also nach unten hin - erfolgen. Zusätzlich muss dieser Transport durch die Druckausübung bei der Bewegung des Fußes unterstützt werden. Ein Transport von Flüssigkeit - gegen die Schwerkraft - ist daher nicht möglich.

Die vorliegende Erfindung löst das Problem durch die Einführung eines Hydrophilie- und Absorptionsgradienten, der einen effektiven Transport von Flüssigkeit (Wasser) und Wasserdampf in alle Richtungen ermöglicht, insbesondere auch nach oben, was z.B. den Einsatz im Schuhschaft günstig macht.

Ein weiterer Gegenstand der Erfindung betrifft ein Bekleidungsstück, eine Kopfbedeckung, Handschuhe und ein Schuhwerk mit einer Außenschicht, welche dadurch gekennzeichnet sind, dass mindestens ein Teil derselben mit dem erfindungsgemäßen Verbundstoff ausgekleidet ist.

Noch ein weiterer Gegenstand der Erfindung betrifft einen Sitzbezug, z.B. für einen Autositz, der den erfindungsgemäßen Verbundstoff enthält.

Der Stand der Technik vermittelt dem Fachmann die Erkenntnis, die Verwendung einer Wirkware bzw. eines Abstandsgewebes und der Funktionsschicht reiche zusammen mit der beim Abrollen des Fußes entstehenden Pumpwirkung für eine ausreichende Belüftung und eine gleichzeitige Weiterleitung der Feuchtigkeit aus dem Schuhinneren über die Funktionsschicht zum Außenmaterial aus.

Es wird jedoch festgestellt, dass diese Bedingungen nicht hinreichend sind, die in allen Bereichen des Schuhinneren auftretende Feuchtigkeit schnell abzuleiten, was sich bereits durch das Entstehen von Feuchtigkeitsnestern manifestiert.

Darüber hinaus gewährleistet der Stand der Technik nicht im befriedigenden Maße, dass die einmal in Richtung Membran abgeleitete Feuchtigkeit nicht wieder zurückgeführt wird.

Durch die zunehmende Hydrophilie bzw. das zunehmende Absorptionsvermögen der beiden Schichten des Zweischichtenverbundes in Richtung der Funktionsschicht kommt es zu einer Vorzugsrichtung für den Feuchtigkeitstransport, praktisch zu einem "Einbahnstraßeneffekt". Die Feuchtigkeit wird rasch und effizient in Richtung Funktionsschicht transportiert und durch diese hindurch in Form von Wasserdampf abgeführt.

Der Trick liegt in der Tatsache, dass die auf der von der Funktionsschicht abgewandten Seite des Zweischichtenverbundes befindliche Schicht als eine Sperrschicht für die Feuchtigkeit wirkt, wohingegen die der Funktionsschicht zugewandten Schicht des Zweischichtenverbundes als eine Saugschicht wirkt. Durch die höhere Hydrophilie bzw., das gesteigerte Absorptionsvermögen der letztgenannten Schicht wird die Feuchtigkeit in die Richtung der Funktionsschicht gesaugt und kehrt wegen der niedrigeren Hydrophilie bzw. des geringeren Absorptionsvermögens der Sperrschicht nicht zurück.

Die Saugschicht hat zwei Funktionen:
1- Sie leitet schnell die Feuchtigkeit an die Membrane weiter.
2- Sie verteilt die Feuchtigkeit großflächig: Die aufgesaugte Feuchtigkeit wird horizontal weitergegeben, wobei die Saugwirkung nach der Testmethode DIN 53924 [Bestimmung der Sauggeschwindigkeit von textilen Flächengebilden gegenüber Wasser (Steighöhenverfahren)] bestimmt wird. Dadurch wird die Membrane schnell großflächig aktiviert, und dadurch optimale Wasserdampftransporteigenschaften erreicht.

Diese Doppelschicht aus Sperr- und Saugschicht, lediglich gesteuert durch den Hydrophilieunterschied bzw. -gradienten und den Unterschied im Absorptionsvermögen ist erheblich wirksamer als die Verwendung einer Wirkware bzw. eines Abstandsgewebes, wie im Stand der Technik beschrieben.

Der gewünschte Hydrophilie- bzw. Absorptionsgradient kann dabei grundsätzlich auf unterschiedliche Art und Weise erreicht werden. Neben dem Einsatz verschiedener Materialien oder Materialkombinationen mit inhärent unterschiedlicher Hydrophilie, z. B. Polyester / Polyamid oder Polypropylen / Polyamid , kann der Gradient auch dadurch eingestellt werden, dass die Fasern des Schichtenverbundes unterschiedliche Feinheiten aufweisen und / oder grobkapillarigere neben feinkapillarigeren Schichten vorliegen. Darüber hinaus sind auch die im Stand der Technik bekannten Ausrüstungsverfahren zur Veränderung der Hydrophilie / Hydrophobie von textilen Materialien geeignet, den gewünschten Gradienten einzustellen.

In einer bevorzugten Ausführungsform enthält die luftdurchlässige Doppelschicht mindestens eine Vliesschicht, noch bevorzugter bestehen beide Schichten der luftdurchlässigen Doppelschicht aus Vliesschichten, die sich durch ihre zunehmende Hydrophilie in Richtung der Funktionsschicht unterscheiden. So kann die der Funktionsschicht zugewandte Schicht der Doppelschicht z.B. ein Polyamidvlies und die der Funktionsschicht gegenüber liegende Schicht der Doppelschicht ein Polyestervlies sein. Die Doppelschicht kann aus gleichen oder unterschiedlichen Materialien (z.B. aus Polyester oder Polyamid) bestehen. Sofern beide Schichten der Doppelschicht aus den gleichen Materialien bestehen, unterscheiden sich diese Materialien beispielsweise in ihrer Feinheit und / oder in ihrer Kapillarität.

In einer besonderen Ausführungsform ist der Zweischichtenverbund des erfindungsgemäßen Verbundstoffes so aufgebaut, dass die der Funktionsschicht zugewandte Schicht des Zweischichtenverbundes durch einen Vliesstoff aus feineren Fasern (z. B. Nanofasern, Microfasern oder Standardfasern) gebildet wird und die gegenüberliegende Schicht des Zweischichtverbundes durch einen Vliesstoff aus, im Vergleich zu der der Funktionsschicht zugewandten Schicht, gröberen Fasern gebildet wird.

Auf diese Weise wird in einfacher und eleganter Art erreicht, dass der Feuchtigkeitstransport in Richtung Funktionsschicht effizient und schnell bewirkt wird.

Bevorzugt wird weiterhin ein Verbundstoff der sich dadurch auszeichnet, dass der Zweischichtenverbund als eines seiner Materialien Polyester enthält und so aufgebaut ist, dass die der Funktionsschicht zugewandte Schicht des Zweischichtenverbundes durch einen Vliesstoff mit einem geringeren Anteil an Polyester gebildet wird und die gegenüberliegende Schicht des Zweischichtverbundes durch einen Vliesstoff mit einem höheren Anteil an Polyester.

Besonders bevorzugt enthält der Zweischichtenverbund als weiteres Material Polyamid. Der Anteil der Materialien Polyester und Polyamid in den Schichten des Zweischichtenverbundes kann je nach gewünschter Hydrophilie zwischen 0 und 100 % liegen.

Als Funktionsschicht eignen sich besonders solche, welche wasserdicht und wasserdampfdurchlässig sind. Hierfür sind beispielsweise Funktionsschichten bevorzugt, die eine Folie oder Membran aus gerecktem Polytetrafluorethylen (ePTFE) (Gore-Tex), Polyester, Polyetherester, Poyetherurethan, Polyetheramid und/oder Polyurethan aufweisen. Die Membran aus Polytetrafluorethylen kann mikroporös sein und vorzugsweise mit hydrophilem Polyurethan oder anderen Polymeren beschichtet sein.

In einer weiteren Ausführungsform kann die Membran aus Polyetherester und/oder Polyester nicht porös, sondern homogen sein, wobei vorzugsweise hydrophiler Polyester bzw. hydrophiler Polyetherester verwendet werden. Diese Membran (Sympatex-Membran) weist vorteilhafterweise eine Dicke von z. B. 10 µm oder 15 µm und eine Dichte von 1,27g/cm³ auf. Sie zeichnet sich u. a. durch hervorragende Wasserdichtigkeit und Wasserdampfdurchlässigkeiten von über 2700g/m²/24h aus.

Besonders bevorzugt ist eine Funktionsschicht mit der homogenen Polyetherester-Membran, da diese nicht nur hervorragende Dampfdurchlasseigenschaften aufweist, sondern gleichfalls, insbesondere bei Einsatz in Winterschuhen einen ausgezeichneten Kälteschutz bietet. Zudem wird das bei starker Schwitzfeuchtigkeit hervorgerufene unangenehme Feuchtegefühl durch Verwendung der homogenen, hydrophilen Membran als Funktionsschicht stark herabgesetzt.

In einer vorteilhaften Ausgestaltung des Erfindungsgegenstands enthält die Funktionsschicht ein wasserdichtes, wasserdampfdurchlässiges Material, wobei das wasserdichte, wasserdampfdurchlässige Material eine Folie aus gerecktem Polytetrafluorethylen, eine Membran aus Polyetherester, Polyetherurethan oder Polyetheramid, eine Polyester-Membran und/oder eine mikroporöse, vorzugsweise Polyurethan-, Beschichtung sein kann. Die Polyetherester-Membran oder Polyester-Membran kann homogen sein.

Die homogene Membran erweitert zudem aufgrund ihrer einzigartigen Eigenschaft, nämlich für hautirritierende, netzende oder ätzende Flüssigkeiten nicht durchgängig zu sein, das Einsatzspektrum des erfindungsgemäßen Verbundstoffs ebenso auf den industriell-chemischen Bereich. Die Verwendung des erfindungsgemäßen Verbundstoffs in Schuhen, Bekleidungsstücken für Arbeiten im chemischen Bereich schützt den Benutzer ganzflächig vor Säuren und Basen, ohne dass die Gefahr des übermäßigen Schwitzens für den Benutzer bei seiner Tätigkeit zu befürchten ist.

Ein Verbundstoff mit einer Funktionsschicht aus der o.g. Membran eignet sich überdies, da die Membran eine Reißdehnung von ca. 300% hat.

Selbstverständlich lässt sich der erfindungsgemäße Verbundwerkstoff auch mit an sich üblichen, weiteren Schichten kombinieren.

In einer weiteren bevorzugten Ausführungsform ist der erfindungsgemäße Verbundstoff dadurch gekennzeichnet, dass die Funktionsschicht mit ihrer dem Zweischichtenverbund gegenüberliegenden Seite an eine Wirkwarenschicht oder an ein Abstandsgewirke angrenzt.

Eine solche Wirkwarenschicht ist einfach herstellbar, da aufgrund herkömmlicher Herstellungsverfahren die Abstandsstruktur bahnflächenverbindende Maschen mit, vorzugsweise monofilen, elastischen oder flexiblen Fäden enthält, die abwechselnd mit je einer Gewirkebahn verbunden oder vermanscht sein können. Darüber hinaus sind vorzugsweise die die bahnenflächenverbindenden Maschen bildende Monofilamente als Abstandshalter zu verwenden.

In einer weiteren Ausführungsform des erfindungsgemäßen Verbundstoffs kann die Funktionsschicht mit der Wirkwarenschicht, vorzugsweise punkt-, gitter- und/oder streifenförmig, verklebt sein.

In einer überaus bevorzugten Ausführungsform kann das textile Abstandsgewirke Kettenwirkware oder Raschelware sein, wobei die Kettenwirkware doppelflächig ist. Ebenso können die Gewirkebahnen Abstandshalter-Bändchen oder Stege aufweisen. Weiterhin ist es möglich, die Abstandsstruktur und/oder die Gewirkebahnen mit Rechts-Rechts- oder Rechts- Links- Gewirkestruktur herzustellen. Da die Abstandsstruktur eine Web-, Strick- oder Vliesschicht sein kann, sind die Herstellungsmethoden derselben aufgrund der Verwendbarkeit aller möglichen Garne, wie Naturfasern und/oder synthetische Fasern - multifil oder monofil - nicht auf spezielle abgestellt und daher niedrig sowie somit die Kosten zur Herstellung eines Produkts mit diesem Verbundstoff, e.g. Schuhwerk, Bekleidungsstück, Handschuhe, Kopfbedeckungen, entsprechend gering.

In noch einer weiteren bevorzugten Ausführungsform ist der erfindungsgemäße Verbundstoff dadurch gekennzeichnet, dass die Funktionsschicht mit ihrer dem Zweischichtenverbund gegenüberliegenden Seite an eine Außenschicht angrenzt. Diese Außenschicht kann mindestens ein Vertreter der eine Lederschicht, Textilschicht, textilartige Schicht und Gewebe umfassenden Gruppe sein. Möglich sind für die Außenschicht als Obermaterial Segeltuchstoffe, Chintz, Everglaze, Frottierware, Samt, Manchester, Cord, Velveton, Norzon, Ledertuch, Ledersamt, Duvetine, gestrickte oder gewirkte Gewebe, Satin, Fell, Feilimitation, Rau-, Glatt-, Lackleder oder geschliffenes, geprägtes, geschrumpftes oder gekrispeltes Leder.

Ebenso kann der erfindungsgemäße Verbundstoff in einem Bekleidungsstück mit einer Außenschicht verwendet werden, bei welchem mindestens ein Teil des Bekleidungsstückes auf der Innenseite der Außenschicht mit dem Verbundstoff ausgekleidet ist. Auch ist es möglich, eine Kopfbedeckung mit einer Außenschicht herzustellen, wobei mindestens ein Teil der Kopfbedeckung auf der Innenseite der Außenschicht mit dem erfindungsgemäßen Verbundstoff ausgekleidet ist. Gleichfalls kann ein Handschuh mit einer Außenschicht und dem erfindungsgemäßen Verbundstoff versehen sein, welcher dadurch gekennzeichnet ist, dass mindestens ein Teil des Handschuhs auf der Innenseite der Außenschicht mit dem erfindungsgemäßen Verbundstoff versehen ist.

In einer besonderen Ausführungsform kann ein Schuhwerk mit einer Außenschicht und dem Verbundstoff so aufgebaut sein, dass mindestens ein Teil des Schuhwerks auf der Innenseite der Außenschicht mit dem erfindungsgemäßen Verbundstoff ausgekleidet ist.

In einer weiteren bevorzugten Ausführungsform zeichnet sich der ist der Verbundstoff dadurch aus, dass der Zweischichtenverbund mit seiner der Funktionsschicht gegenüberliegenden Seite an einen Futterstoff bzw. eine Futterschicht angrenzt.

Derartige Futterschichten sind bekannt, wobei die Futterschicht eine Frotteeschicht, Ziegen-, Schaf-, Rind-, Schweinslederfutterschicht, Samtschicht, Kamelhaarstoffschicht, gestrickte oder gewebte Fellschicht oder eine Wirkwaren- oder Gewebeschicht sein kann, vorteilhafterweise aus Baumwolle, Schurwolle, synthetischen Fasern und/oder regenerierter und/oder modifizierter Cellulose.

Ganz besonders bevorzugt ist die Futterschicht hydrophil. Noch bevorzugter steigt die Hydrophilie von der Futterschicht über den luftdurchlässigen Zweischichtenverbund in Richtung der Funktionsschicht an. Auf diese Weise sind eine wirksame Saugwirkung und ein guter Feuchtigkeitstransport in Richtung der Funktionsschicht gewährleistet.

Die Futterschichten, die eine netzartige oder perforierte offene Struktur haben, können hydrophob ausgerüstet sein, somit kann die Feuchtigkeit durch die Löcher leicht und schnell an die Sperrschicht bzw. an die Saugschicht durchdringen.

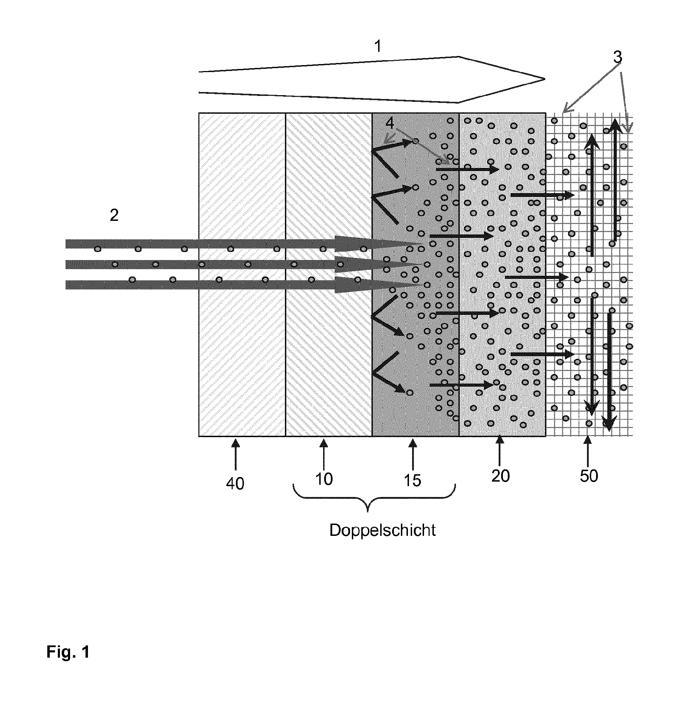

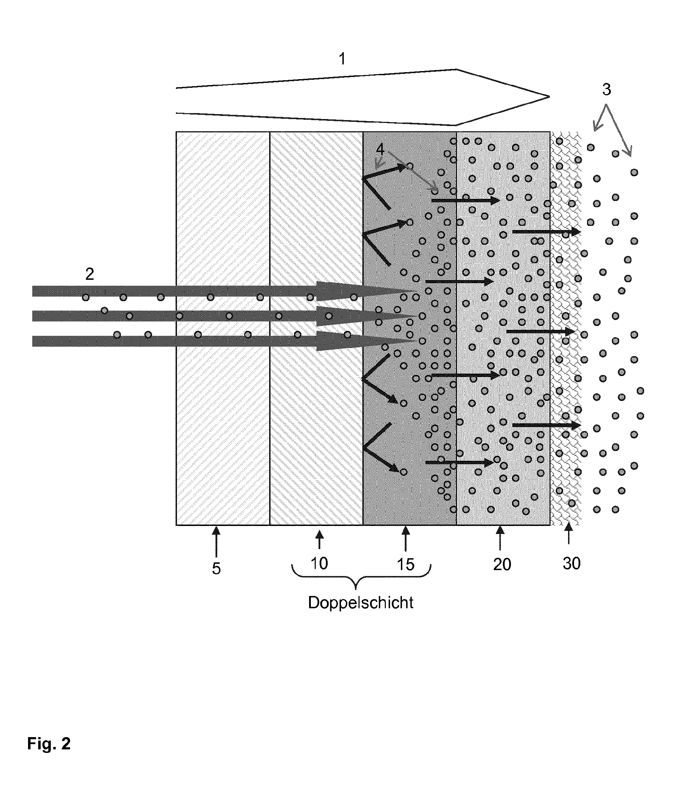

Weitere Einzelheiten, Aspekte und Vorteile der vorliegenden Erfindung ergeben sich aus der nachfolgenden Beschreibung zweier bevorzugter Ausführungsformen anhand schematischer Abbildungen als Fig. 1 und 2. Gleiche Nummern innerhalb der Figuren weisen auf die gleichen Bestandteile hin.

Fig. 1 zeigt schematisch einen Aufbau, der den erfindungsgemäßen Verbundstoff in einem bevorzugten Schichtaufbau, wie er z.B. in einem Sitzüberzug Verwendung findet, darstellt.

Der Pfeil 1 zeigt die Richtung der Zunahme der Hydrophilie über den Schichtaufbau an. Die Pfeile 2 und 4 geben die Strömungsrichtung der Feuchtigkeit bzw. des Wasserdampfes innerhalb des Schichtaufbaus an. Die Feuchtigkeit bzw. der Wasserdampf 3 selbst sind als kleine Kreise dargestellt. Die Schicht 40 stellt das Obermaterial des Sitzes dar, z.B. Leder. Der luftdurchlässige Zweischichtenverbund, bestehend aus der Schicht 10 (auch als Sperrschicht bezeichnet) und Schicht 15 mit höherer Hydrophilie (auch als aktive, sehr saugfähige Schicht bezeichnet) grenzt an die Schicht 20 (die Funktionsschicht bzw. Membran). Oberhalb der Membran befindet sich als Schicht 50 ein Abstandsgewirke. Man erkennt anhand der gewinkelten Pfeile 4, dass die Sperrschicht 10 dafür sorgt, dass die Feuchtigkeit bzw. der Wasserdampf 3 nicht - oder zumindest im Wesentlichen nicht - zurückströmen kann. Es bildet sich ein Hydrophilie- und Absorptionsgradient über den Schichtaufbau aus.

Fig. 2 zeigt schematisch einen Aufbau, der den erfindungsgemäßen Verbundstoff in einem bevorzugten Schichtaufbau, wie er z.B. in einem Schuh Verwendung findet, darstellt.

Der Pfeil 1 zeigt die Richtung der Zunahme der Hydrophilie über den Schichtaufbau an. Die Pfeile 2 und 4 geben die Strömungsrichtung der Feuchtigkeit bzw. des Wasserdampfes innerhalb des Schichtaufbaus an. Die Feuchtigkeit bzw. der Wasserdampf 3 selbst sind als kleine Kreise dargestellt. Die Schicht 5 stellt den Futterstoff des Schuhs dar, z.B. eine Polyester- oder Polyamidwirkware oder ein Polyestervlies. Der luftdurchlässige Zweischichtenverbund, bestehend aus der Schicht 10 (auch als Sperrschicht bezeichnet) und Schicht 15 mit höherer Hydrophilie (auch als aktive, sehr saugfähige Schicht bezeichnet) grenzt an die Schicht 20 (die Funktionsschicht bzw. Membran). Oberhalb der Membran befindet sich als Schicht 30 eine Außenschicht, z.B. eine Wirkware, Gewebe, Vliesstoff oder Leder. Man erkennt anhand der gewinkelten Pfeile 4, dass die Sperrschicht 10 dafür sorgt, dass die Feuchtigkeit bzw. der Wasserdampf 3 nicht - oder zumindest im Wesentlichen nicht - zurückströmen kann. Es bildet sich ein Hydrophilie- und Absorptionsgradient über den Schichtaufbau aus.

In beiden Ausführungsformen ist das Zusammenwirken zwischen der Sperrschicht 10, der sehr saugfähigen Schicht 15 und der Membran 20 entscheidend. Insbesondere durch die Tatsache, dass die Saugschicht 15 eine höhere Hydrophilie aufweist als die Sperrschicht, entsteht eine Beschleunigung des Abtransportes der Feuchtigkeit in Richtung Funktionsschicht (Membran) 20. Die aktive, sehr saugfähige Schicht sorgt also dafür, dass die Feuchtigkeit nur in Richtung Membran läuft, die Feuchtigkeit oder der Schweiß großflächig verbreitet und an die Membran weiter gegeben wird. Die Membran wird durch die Feuchtigkeitszufuhr stark aktiviert. Je feuchter die Membran ist, desto atmungsaktiver wird die Membran.

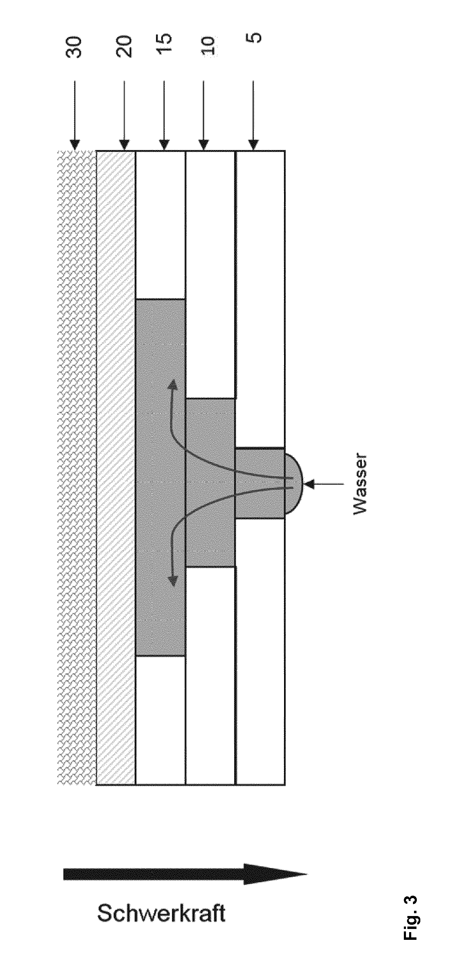

Fig. 3 zeigt schematisch auf, dass der Feuchte bzw. Wasserdampftransport - im Unterschied zum Stand der Technik - auch gegen die Richtung der Schwerkraft erfolgen kann. Am Beispiel der Abfolge von unten nach oben: Futterstoff 5, hydrophile Sperrschicht 10, aktive sehr saugfähige Schicht 15, Membrane 20 sowie Wirkware 30 wird dargestellt, wie der Abtransport der Feuchte nach oben hin erfolgt.

Fig. 4 und Fig. 5 stellen dar, wie die verschiedenen Schichten - und insbesondere, wie die Saugschicht 15 das Wasser im Steighöhenverfahren schnell aufsaugt, und großflächig verteilt.

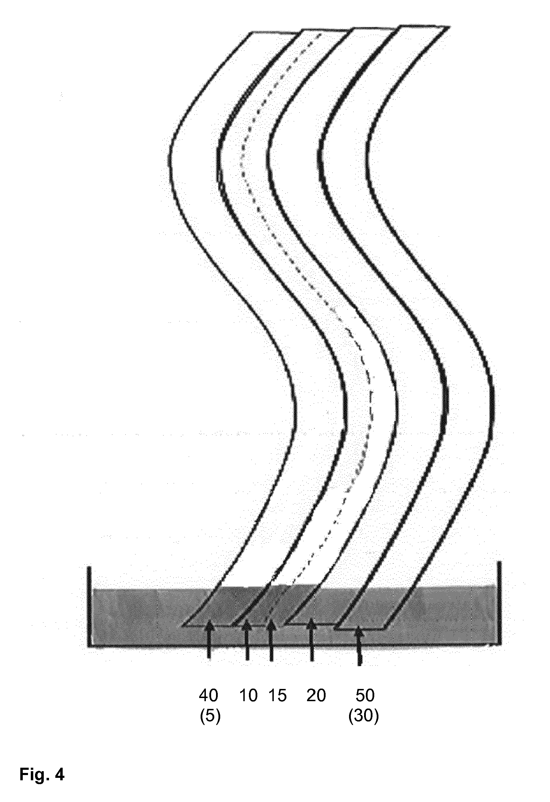

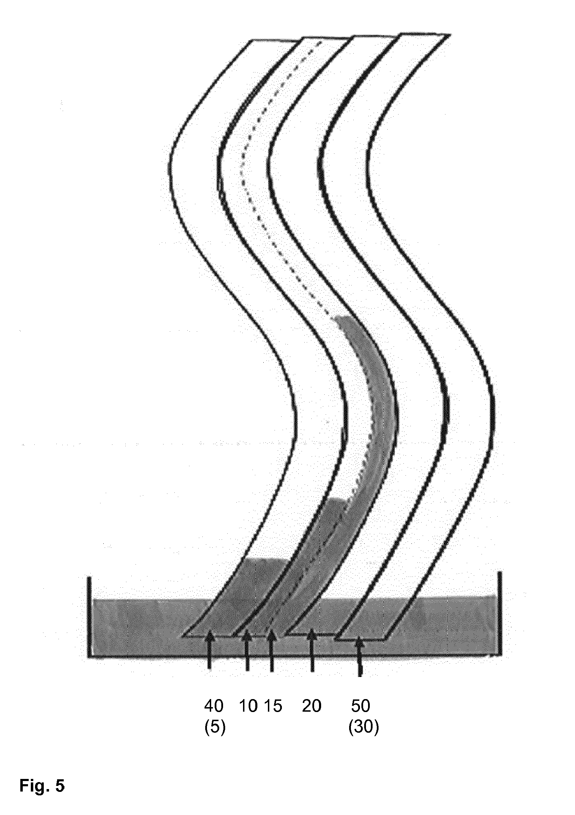

In den Fig. 4 und 5 entsprechen die Schichten denjenigen bei der Beschreibung der Fig. 1 und 2, also von links nach rechts: 40 (Obermaterial beim Sitz) bzw. 5 (Futterstoff beim Schuh); 10 (Sperrschicht); 15 (aktive, sehr saugfähige Schicht); 20 (Funktionsschicht oder Membran); 50 (Abstandsgewirke beim Sitz) bzw. 30 (Außenschicht beim Schuh).

### Beispiel

Es wird ein erfindungsgemäßer Verbundstoff bereitgestellt umfassend einen Futterstoff (5) aus einem Gewirke mit einer Zusammensetzung von 83% Polyamid/ 17% Polyester (erhältlich z.B. von der Fa. Wilhelm Textil, Pirmasens). Weiterhin enthält der Verbundstoff einen Vliesstoff (erhältlich z.B. von der Fa. Hassan, Türkei) als Doppelschicht aus hydrophiler Sperrschicht (10) und saugfähiger Schicht (15), wobei der Bereich der hydrophilen Sperrschicht (10) zu 100% aus Polyester besteht und die saugfähige Schicht (15) aus 80% Polyester / 20% Polyamid. Als Funktionsschicht (20) dient eine Polyetherester-Membran der Fa. Sympatex Unterföhring. Auf der anderen Seite der Funktionsschicht (20) befindet sich als Außenschicht (30) eine Wirkware aus 100% Polyester, (erhältlich z.B. von der Fa. Mattes & Ammann, Meßstetten-Tieringen).

Die Tabelle zeigt die Steighöhen der einzelnen Schichten des oben vorstehend beschriebenen Verbundstoffes - gemessen in Anlehnung an DIN 53924 - von Futterstoff 5, hydrophiler Sperrschicht 10 und aktiver, sehr saugfähiger Schicht 15 nach verschiedenen Zeitabständen. Anhand der Messergebnisse kann man erkennen, dass ein Hydrophilie- bzw. Absorptionsgradient in Richtung der Membran aufgebaut wird.

**Tabelle:**

| | **Zeit** | | | |
|---|---|---|---|---|
| | **Nach 30 sec** | **Nach 2 min** | **Nach 5 min** | **Nach 10 min** |
| **Futterstoff (5)** | 10 mm | 30 mm | 50 mm | 60 mm |
| **Hydrophile Sperrschicht (10)** | 20 mm | 50 mm | 70 mm | 90mm |
| **Aktive, sehr saugfähige Schicht (15)** | 40 mm | 80 mm | 110 mm | 140 mm |

## Patentansprüche

1. Verbundstoff zur Anwendung im Schuhschaft, Sohle oder im Sitzüberzug, umfassend eine wasserdichte, wasserdampfdurchlässige Funktionsschicht sowie einen luftdurchlässigen Zweischichtenverbund, wobei
der Zweischichtenverbund so aufgebaut ist, dass die der Funktionsschicht zugewandte Schicht des Zweischichtenverbundes eine größere Hydrophilie bzw. ein höheres Absorptionsvermögen aufweist als die der Funktionsschicht gegenüberliegende Schicht des Zweischichtenverbundes.

2. Der Verbundstoff nach Anspruch 1, **dadurch gekennzeichnet, dass** die Hydrophilie bzw. das Absorptionsvermögen sukzessive in Richtung der Funktionsschicht zunimmt.

3. Der Verbundstoff nach Anspruch 1 oder 2, **dadurch gekennzeichnet, dass** die beiden Schichten des Zweischichtenverbundes aus Vliesstoffen, Wirk-, Strickwaren, Geweben oder deren Kombinationen bestehen.

4. Der Verbundstoff nach einem oder mehreren der vorhergehenden Ansprüche, **dadurch gekennzeichnet, dass** der Zweischichtenverbund so aufgebaut ist, dass die der Funktionsschicht zugewandte Schicht des Zweischichtenverbundes durch einen Vliesstoff aus feineren Fasern gebildet wird und die gegenüberliegende Schicht des Zweischichtverbundes durch einen Vliesstoff aus gröberen Fasern gebildet wird.

5. Der Verbundstoff nach einem oder mehreren der vorhergehenden Ansprüche, **dadurch gekennzeichnet, dass** der Zweischichtenverbund als eines seiner Materialien Polyester enthält und so aufgebaut ist, dass die der Funktionsschicht zugewandte Schicht des Zweischichtenverbundes durch einen Vliesstoff mit einem geringeren Anteil an Polyester gebildet wird und die gegenüberliegende Schicht des Zweischichtverbundes durch einen Vliesstoff mit einem höheren Anteil an Polyester.

6. Der Verbundstoff nach Anspruch 5, **dadurch gekennzeichnet, dass** der Zweischichtenverbund als weiteres Material Polyamid enthält.

7. Der Verbundstoff nach einem oder mehreren der vorhergehenden Ansprüche, **dadurch gekennzeichnet, dass** die einzelnen Schichten so gewählt sind, dass sich ein Hydrophilie- bzw. Absorptionsgradient mit Zunahme in Richtung der Funktionsschicht einstellt.

8. Der Verbundstoff nach einem oder mehreren der vorhergehenden Ansprüche, **dadurch gekennzeichnet, dass** es sich bei der Funktionsschicht um eine Folie oder Membran aus gerecktem Polytetrafluorethylen (ePTFE) (Gore-Tex), Polyetherester, Polyetheramid, Polyetherurethan, Polyester und/oder Polyurethan handelt.

9. Der Verbundstoff nach einem oder mehreren der vorhergehenden Ansprüche, **dadurch gekennzeichnet, dass** die Funktionsschicht mit ihrer dem Zweischichtenverbund gegenüberliegenden Seite an eine Wirkware oder ein Abstandsgewirke angrenzt.

10. Der Verbundstoff nach einem oder mehreren der vorhergehenden Ansprüche, **dadurch gekennzeichnet, dass** der Zweischichtenverbund mit seiner der Funktionsschicht gegenüberliegenden Seite an einen Futterstoff angrenzt.

11. Sitzüberzug enthaltend einen Verbundstoff nach Anspruch 9.

12. Ein Bekleidungsstück, eine Kopfbedeckung, Handschuhe und ein Schuhwerk enthaltend einen Verbundstoff nach Anspruch 10.

## Claims

1. Composite material for application in a shoe upper, sole or seat cover, comprising a waterproof, water vapour-permeable functional layer as well as an air-permeable dual-layer composite, wherein the dual-layer composite is constructed so that the layer of the dual-layer composite facing the functional layer has a higher hydrophilicity and absorptivity than the layer of the dual-layer composite facing away from the functional layer.

2. The composite material according to Claim 1, **characterised in that** the hydrophilicity and absorptivity increase successively in the direction of the functional layer.

3. The composite material according to Claims 1 or 2, **characterised in that** both layers of the dual-layer composite consist of non-woven fabrics, knitted fabrics, woven fabrics or combinations thereof.

4. The composite material according to one or more of the previous claims, **characterised in that** the dual-layer composite is constructed so that the layer of the dual-layer composite facing the functional layer is formed by a non-woven fabric made of finer fibres and the opposite layer of the dual-layer composite is formed by a non-woven fabric made of coarser fibres.

5. The composite material according to one or more of the previous claims, **characterised in that** the dual-layer composite contains polyester as one of its materials and is constructed so that the layer of the dual-layer composite facing the functional layer is formed by a non-woven fabric with a lower proportion of polyester and the opposite layer of the dual-layer composite is formed by a non-woven fabric with a higher proportion of polyester.

6. The composite material according to Claim 5, **characterised in that** the dual-layer composite contains polyamide as an additional material.

7. The composite material according to one or more of the previous claims, **characterised in that** the individual layers are selected so that a hydrophilicity and absorptivity gradient is established that increases in the direction of the functional layer.

8. The composite material according to one or more of the previous claims, **characterised in that** the functional layer is a film or membrane made of expanded polytetrafluoroethylene (ePTFE) (Gore-Tex), polyether ester, polyether amide, polyether urethane, polyester and/or polyurethane.

9. The composite material according to one or more of the previous claims, **characterised in that** the side of the functional layer facing away from the dual-layer composite is adjacent to a knitted fabric or 2-dimensional warp knit.

10. The composite material according to one or more of the previous claims, **characterised in that** the side of the dual-layer composite facing away from the functional layer is adjacent to a lining.

11. Seat cover containing a composite material according to Claim 9.

12. An item of clothing, headpiece, gloves and an item of footwear containing a composite material according to Claim 10.

## Revendications

1. Matériau composite destiné à être utilisé dans la tige d'une chaussure, dans la semelle ou dans un revêtement de siège, comprenant une couche fonctionnelle étanche à l'eau et perméable à la vapeur d'eau ainsi qu'un matériau composite à deux couches perméable à l'air,
le composite à deux couches étant constitué de telle manière que la couche du composite à deux couches orientée vers la couche fonctionnelle présente une hydrophilie plus importante, ou un pouvoir d'absorption plus élevé que ceux de la couche du composite à deux couches située à l'opposé de la couche fonctionnelle.

2. Matériau composite selon la revendication 1 **caractérisé en ce que** l'hydrophilie ou le pouvoir d'absorption, augmente successivement en direction de la couche fonctionnelle.

3. Matériau composite selon la revendication 1 ou 2 **caractérisé en ce que** les deux couches du composite à deux couches sont constituées de matériau du type voile, de matériaux du type tricoté ou bonneterie, de tissus, ou de compositions de ceux-ci.

4. Matériau composite selon une ou plusieurs des revendications qui précèdent **caractérisé en ce que** le composite à deux couches est constitué de telle manière que la couche du composite à deux couches orientée vers la couche fonctionnelle est constituée d'un matériau du type voile de fibres assez fines et **en ce que** la couche du composite à deux couches située à l'opposé de celle-ci est constituée d'un matériau du type voile de fibres plus grossières.

5. Matériau composite selon une ou plusieurs des revendications qui précèdent **caractérisé en ce que** le composite à deux couches contient du polyester en tant que l'un de ses matériaux et est constitué de telle manière que la couche du composite à deux couches orientée vers la couche fonctionnelle contient une proportion de polyester plus faible et que la couche du composite à deux couches située à l'opposé comporte un matériau du type voile, doté d'une proportion de polyester plus élevée.

6. Matériau composite selon la revendication 5 **caractérisé en ce que** le composite à deux couches contient du polyamide en tant qu'autre matériau.

7. Matériau composite selon une ou plusieurs des revendications qui précèdent **caractérisé en ce que** les couches individuelles sont choisies de telle manière qu'une hydrophilie ou un gradient d'absorption s'installent avec une augmentation en direction de la couche fonctionnelle.

8. Matériau composite selon une ou plusieurs des revendications qui précèdent **caractérisé en ce qu'**en ce qui concerne la couche fonctionnelle il s'agit d'une feuille mince, ou membrane de polytétrafluoréphylène (ePTFE) (Gore-Tex) étiré, d'ester de polyéther étiré, d'amide de polyéther étiré, de polyétheruréthanne étiré, de polyester étiré et/ou de polyuréthanne étiré.

9. Matériau composite selon une ou plusieurs des revendications qui précèdent **caractérisé en ce que** la couche fonctionnelle est voisine par son côté situé à l'opposé du composite à deux couches d'un textile tricoté ou d'un tissu lâche.

10. Matériau composite selon une ou plusieurs des revendications qui précèdent **caractérisé en ce que** le composite à deux couches est voisin d'un matériau du type doublure par sa face située à l'opposé de la couche fonctionnelle.

11. Revêtement de siège comportant un matériau composite selon la revendication 9.

12. Article d'habillement, coiffure, gants ou article chaussant comportant un matériau composite selon la revendication 10.
